Europäisches Patentamt

(19) European Patent Office

Office européen des brevets

(11) Publication number: **0 021 336**
**B1**

(12) **EUROPEAN PATENT SPECIFICATION**

(45) Date of publication of patent specification: 04.05.83

(51) Int. Cl.³: **G 02 F 1/29, G 02 F 1/01**

(21) Application number: 80103390.3

(22) Date of filing: 18.06.80

(54) Optical display devices.

(30) Priority: 21.06.79 US 50590

(43) Date of publication of application:
07.01.81 Bulletin 81/1

(45) Publication of the grant of the patent:
04.05.83 Bulletin 83/18

(84) Designated Contracting States:
DE FR GB

(56) References cited:
DE - A - 1 813 073
US - A - 3 169 163
US - A - 3 476 460
US - A - 3 612 653
US - A - 3 692 388
US - A - 3 730 608
US - A - 3 807 832
US - A - 3 844 636

(73) Proprietor: International Business Machines
Corporation
Armonk, N.Y. 10504 (US)

(72) Inventor: Sincerbox, Glenn Tavernia
1309 Pernich Court
San Jose California 95120 (US)
Inventor: Gordon, Joseph Grover
184 Castillon Way
San Jose California 95119 (US)

(74) Representative: Lewis, Alan John
IBM United Kingdom Patent Operations Hursley
Park
Winchester, Hants, S021 2JN (GB)

(56) References cited:
MOLECULAR CRYSTALS AND LIQUID
CRYSTALS, Vol. 50, No. 1—4 (1979), New York
M. R. PHILPOTT, A. BRILLANTE, I. R.
POCKRAND, J. D. SWALEN "A New Optical
Phenomenon: Exciton Surface Polaritons at
Room Temperature", pages 139—162
ZEITSCHRIFT FÜR PHYSIK, Band 216, 1968,
Berlin ANDREAS OTTO "Excitation of
Nonradiative Surface Plasma Waves in Silver by
the Method of Frustrated Total Reflexion" pages
368—410

Courier Press, Leamington Spa, England.

Optical display devices

The present invention is concerned with optical display devices

Background art

U.S. Patent 2,185,379 shows an electrically controlled light valve in which micro particles absorb light and diminish total reflection. U.S. Patent 3,476,460 discloses electrically controlled light reflection. U.S. Patent 3,612,653 shows an optical display device comprising a thin parallel sided film of a material interposed between and contacting at one side a flat surface of an optical prism and at its other side, a medium capable of exhibiting a variable refractive index and means for passing light into the prism and onto the said plane surface of the prism. U.S. Patent 3,730,608 shows a system used to modulate beams of light by generation of a gas medium against an electrode. RCA Technical Notes No. 883, April 1, 1971, deals with use of internal strain within a prism to modulate total internal reflection.

None of the above art, nor insofar as we are aware, any prior art shows the control of surface electromagnetic waves by control of index of refraction in a medium adjacent to a film on a prism.

The projection display device of the present invention involves attenuation of total reflection when a film of material with a negative dielectric constant is placed in contact with the base of a prism. Polarized light which ordinarily would be totally reflected by that prism will be reflected in less than totality. That light which is not reflected is converted into surface electromagnetic waves, either plasmons or polaritons, at the surface of the film. The subject of attenuating total reflectivity by means of surface waves is discussed in Zeitschrift fur Physik, 216 pp 398—410, 1968.

The concept of a negative dielectric constant is well known to Physicists but it is difficult to give a simple physical interpretation of it. The dielectric constant is a phenomenological number used to describe matter, which, when inserted into solutions to Maxwell's equations, produces the proper behaviour for electromagnetic disturbances (such as light waves) in that medium. It formally relates the displacement (D) to the electric field intensity (E). $D=KE$, where K is the dielectric constant. Negative dielectric constants are generally associated with electrical conductivity and high reflectivity, hence with metals. Some nonconductors also have negative dielectric constants in spectral regions where they are highly reflecting. The dielectric constant and the refractive index (to which it is related) are frequency dependent parameters. Thus we are concerned here with the dielectric constant at $4.7\times10^{*}14$ Hz, the frequency of light of 632.8 nm wavelength, the wavelength used in the preferred embodiment, and not the (usual) static or zero frequency dielectric constant. Dielectric constants and refractive indices measured at 632.8 nm are given in the table below for some representative materials.

| Material | Dielectric constant | | Refractive index | |
|---|---|---|---|---|
| | K' | K" | n | k |
| Cu | −14.64 | −0.75 | 0.099 | −3.83 |
| Ag | −18.29 | −0.49 | 0.058 | −2.28 |
| Au | −13.01 | −1.26 | 0.175 | −3.61 |
| glass | 2.37 | 0.0 | 1.54 | 0.0 |

The situation is actually somewhat more complicated than outlined above. Thus, it will be noted that there are two entries in the table for the dielectric constant and two for the refractive index of each substance. This is because one really must consider each of these constants to be complex, i.e. to consist of two components. The leftmost component, K' and n, are what is usually meant by the dielectric constant and refractive index respectively. The imaginary parts of the dielectric constant and refractive index, K" and k respectively, are measures of the rate at which a material absorbs energy from the light or, alternatively, the rate of attenuation of light by the material. In fact, k is frequently called the extinction coefficient or absorption constant. A more detailed explanation can be found in Standard Optics or Solid State Physics texts, e.g. M. V. Klein, "Optics", 1970, Wiley and Sons, pp 534FF or M. Ali Omar, "Elementary Solid State Physics" 1975, Addison-Wesley, pp 163FF, and 403FF.

The invention provides an optical display device comprising a thin parallel sided film of a material capable of exhibiting a negative dielectric constant interposed between and contacting at one side a flat surface of an optical prism and at its other side, a medium capable of exhibiting a variable refractive index, means for passing monochromatic plane polarised light into the prism and onto the said plane surface of the prism at an angle to excite a surface electromagnetic wave at the interface between said medium and said film and means for varying the refractive index of said medium.

The invention also provides a projection display device comprising a prism having a base; a thin film of material having a negative dielectric constant and having one side in optical contact with the base of said prism, and a second side; a medium of variable refractive index in contact with said second side of said film; means to pass a beam of light which is plane polarized in the plane of incidence onto the base of said prism at an angle to excite a surface electromagnetic wave at the interface between said medium and said film; and means to vary the refractive index of said medium.

2

The invention will now be more particularly described with reference to the accompanying drawings, in which:—

Figure 1 is a cross-sectional view (not to scale) of a device embodying the present invention.

Figure 2 is a cross-sectional view (not to scale) of one preferred embodiment of the present invention.

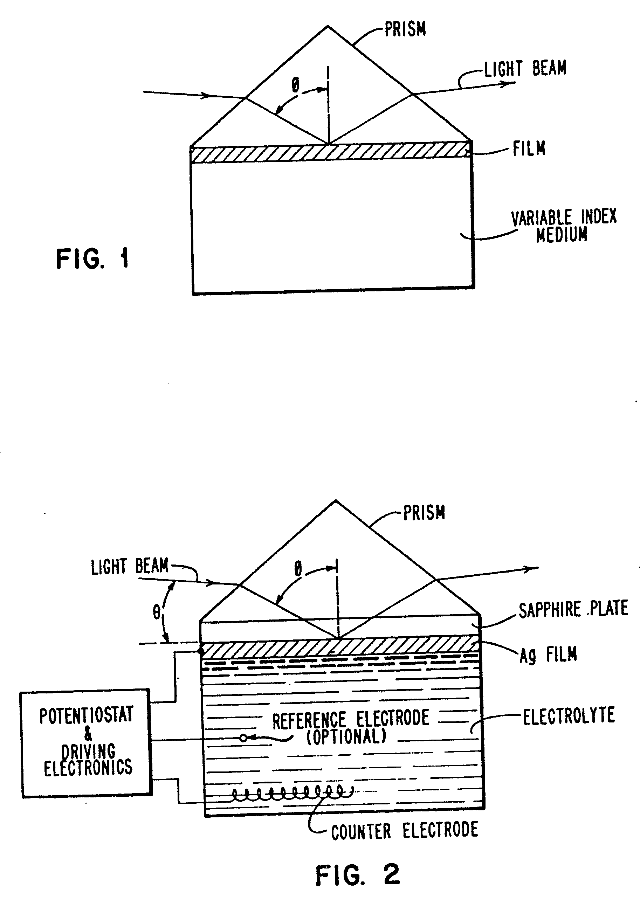

In the device of the present invention, projection display is achieved by the use of an attenuated total reflection element which spatially and temporally modulates the light intensity. As may be seen in Fig. 1, the prism, a film thereon, and a medium having variable refractive index in contact with the film, comprise the display device. The light intensity is controlled by a variation in the refractive index of the medium near the film.

Plane polarized light, having its E-vector in the plane of incidence, is incident on the base of the prism, which has been coated with a thin film on the order of a few hundred angstroms thick. This film is of a material with a negative dielectric constant at the frequency of irradiation. This material is usually a metal such as copper, silver or gold, but it can also be an organic material. Suitable organic materials would be: a polydiacetylene (e.g. poly-2,4-hexadiyne-1,6-diol bis(p-toluene sulphonate), TCNQ (tetracyanoquinodimethane), CTIP (gammacyclopropyl-bis(1,3,3-trimethyl-indolenine-2-yl) pentamethinium fluoroborate), and probably also polyacetylene. The requirement is that the material support a surface wave. The excitation of surface waves, also called surface polaritons, on some of the above materials is discussed in Philpott, Brillante, Pockrand, and Swalen, Mol. Cryst. Liq, Cryst., 1979, 50, 139—162. There are many organic conductors which we have not been able to test but are highly reflecting in the visible and are likely to be suitable materials.

When the material is a metal, the surface electromagnetic wave is a plasmon; when it is nonmetallic, the wave is a polariton. Normally the reflection from the glass-film interface is high when the angle of incidence O is greater than the critical angle. For plane polarized light, however, there exists a particular angle of incidence at which the reflectivity is low. This is the angle at which a surface electromagnetic wave is excited at the interface of the film and the variable index material. The light energy coupled into this oscillation is dissipated in the film. The reflectivity under these conditions is primarily dependent upon the thickness of the film and can in principle be zero. With light incident at the angle for minimum reflectivity, an alteration of the refractive index of the material adjacent to the film destroys the resonance condition and causes the reflectivity to increase. The refractive index may be changed in any of several ways, thereby causing a change in reflectivity. The preferred means for changing the refractive index is electrochemical, but other methods such as photochromism, electrochromism, electro-phoresis or molecular reorientation may also be used.

The prism in the device of the present invention need not be triangular. What is required is that it have a base, which is in contact with the film which has a negative dielectric constant. In addition to the base, the other surface or surfaces of the prism may be curved or planar, or any combination thereof. The simplest prism is, of course, a triangle, as shown in the drawings. Alternatively, it may be hemispherical, hemicylindrical or trapezoidal.

Best mode for carrying out the invention

In the preferred embodiment of the device of the present invention, the film of material having a negative dielectric constant constitutes one electrode in an electrochemical cell. Electrodeposition of an organic film on this electrode changes the refractive index and causes reflectivity to increase. Hence, electrically controlled deposition and removal of the organic film controls the reflectivity from the base of the prism and thereby controls the intensity of the light transmitted. The electrode may consist of individually addressable elements, for example, in a x,y matrix array, so that arbitrary patterns may be generated for the projection of two-dimensional images.

Turning again to Figure 2, we see a specific embodiment of the preferred device of the present invention. A LaSF5 prism (n=1.88, base angle=45°) is placed in optical contact (index matching liquid) with a sapphire slide (n=1.77) upon which a layer of silver has been evaporated. The layer of silver has a thickness of from between 300 to 500Å units. The electrode is an aqueous solution, 0.3M in KBr and 0.0113M in heptylviologen bromide. A three-electrode cell is employed and potentials are measured versus an Ag/AgCl reference electrode. The light source is a HeNe laser (6328Å units).

With no organic film deposited the minimum reflectivity occurred at theta=31° (O=57.3°). The reflectivity was 12.5%. Upon stepping the potential from .3 to .5 volts, a film of viologen radical cation was deposited and the reflectivity increased to a limiting value of 55.6%. This limiting value represents a contrast ratio of 4.4. The reflectivity is a continuous function of the charge passed, which in turn is a measure of the thickness of the film. The charge in micro coul/cm$^2$ experimentally required to obtain a given contrast ratio of reflectivity is given in the table below.

| Contrast $(R/R_{min})$ | R(%) | Q $(mC/cm^2)$ |
|---|---|---|
| 1 | 12.5 | 0 |
| 2 | 25 | .34 |
| 3 | 37.5 | .83 |
| 4 | 50 | 1.86 |

Since the maximum reflectivity in most systems will be about 60%, the contrast ratio is determined primarily by the value of the minimum reflectivity. This is a function of the thickness of the metal film. We have obtained silver films which have a minimum reflectivity of less than 2%, resulting in a potential contrast ratio of better than 30:1 for 2 $mC/cm^2$. Attaining these low values is a matter of controlling the deposition conditions.

The optical contact between the prism and the silver ensures that there are substantially no reflection losses due to any interfaces interposed between the prism and the metal. For convenience the metal film is deposited on a flat glass slide, which must then be placed in optical contact with a prism. Normally there will be a small unavoidable air space between the prism and glass slide and a finite fraction of the incident light will be reflected from the prism: air and the air: slide interfaces. These reflections can be virtually eliminated by filling the space between the prism and the slide with a liquid (or other substance) whose refractive index is close to that of the prism and slide. The two are then said to be in optical contact.

The device of the present invention has several advantages. Only a small deposit is required. Writing speed is quite rapid; contrast is high and lifetime is long. Furthermore, the deposited film need not be colored. Still an additional advantage is that the change in refraction index needs to occur over only a small depth of the medium, i.e. on the order of about 0.1 microns or less.

## Claims

1. An optical display device comprising a thin parallel sided film of a material capable of exhibiting a negative dielectric constant interposed between and contacting at one side a flat surface of an optical prism and at its other side, a medium capable of exhibiting a variable refractive index, means for passing monochromatic plane polarised light into the prism and onto the said plane surface of the prism at an angle to excite a surface electromagnetic wave at the interface between said medium and said film and means for varying the refractive index of said medium.

2. A device as claimed in claim 1, in which the surface wave is a surface plasmon wave or a surface polariton wave.

3. A device as claimed in claim 1 or 2, in which the medium is an electrolyte and the refractive-index-varying-means comprise means for causing an electrochemical reaction in the electrolyte.

4. A device as claimed in claim 1 or 2, in which the medium is an electrolyte and the refractive-index-varying-means comprise means for causing a photochromic or electrochromic reaction in the electrolyte.

5. A device as claimed in claim 1 or 2, in which the medium is an electrolyte and the refractive-index-varying-means comprise means for causing an electro-phoresic reaction in the electrolyte or a molecular reorientation thereof.

6. A projection display device comprising a prism having a base; a thin film of material having a negative dielectric constant and having one side in optical contact with the base of said prism, and a second side; a medium of variable refractive index in contact with said second side of said film; means to pass a beam of light which is plane polarised in the plane of incidence onto the base of said prism at an angle to excite a surface electromagnetic wave at the interface between said medium and said film; and means to vary the refractive index of said medium.

7. A device as claimed in claim 6 wherein the refractive index of the medium is varied by means of an electrochemical reaction or a photochromic reaction.

## Patentansprüche

1. Einrichtung zur optischen Bildanzeige, gekennzeichnet durch

— eine dünne, mit parallelen Begrenzungsflächen versehene Schicht eines Materials, das eine negative Dielektrizitätskonstante aufweisen kann, wobei die eine Begrenzungsfläche der Schicht eine ebene Oberfläche eines optischen Prismas und die andere Begrenzungsfläche ein Medium berührt, das einen variablen Brechungsindex aufweisen kann,
— eine Einrichtung, um monochromatisches, in einer Ebene polarisiertes Licht so in das Prisma zu lenken, daß es an dessen ebener Oberfläche unter einem Winkel auftrifft, um an der Grenzfläche zwischen dem Medium und der Schicht eine elektromagnetische Oberflächenwelle zu erregen und
— eine Einrichtung, um den Brechungsindex des Mediums zu verändern.

2. Einrichtung nach Anspruch 1, dadurch gekennzeichnet, daß die Oberflächenwelle eine Oberflächen-Plasmonenwelle oder eine Oberflächen-Polaritonenwelle ist.

3. Einrichtung nach Anspruch 1 oder 2, dadurch gekennzeichnet, daß das Medium ein Elektrolyt ist und die Einrichtung zur Änderung des Brechungsindex eine Vorrichtung enthält, um eine elektrochemische Reaktion im Elektrolyten hervorzurufen.

4. Einrichtung nach Anspruch 1 oder 2, dadurch gekennzeichnet, daß das Medium ein Elektrolyt ist und die Einrichtung zur Änderung des Brechungsindex eine Vorrichtung enthält, mit der eine photochrome oder eine elektrochrome Reaktion im Electrolyten hervorgerufen werden kann.

5. Einrichtung nach Anspruch 1 oder 2, dadurch gekennzeichnet, daß das Medium ein Elektrolyt ist und die Einrichtung zur Änderung des Brechungsindex eine Vorrichtung enthält, mit der im Elektrolyten eine Elektrophorese-Reaktion oder dessen molekulare Reorientierung hervorgerufen werden kann.

6. Einrichtung zur optischen Bildanzeige, gekennzeichnet durch

— ein Prisma mit einer Grundfläche;
— eine dünne Schicht eines Materials mit negativer Dielektrizitätskonstante, das eine erste Seite aufweist, die im optischen Kontakt mit der Grundfläche des Prismas steht, sowie eine zweite Seite;
— ein Medium mit einem variablen Brechungsindex, das in Kontakt mit der zweiten Seite der dünnen Schicht steht;
— Einrichtungen, um einen Lichtstrahl, der in der Einfallsebene polarisiert ist, auf die Grundfläche des Prismas unter einem Winkel zu lenken, bei dem an der Grenzfläche zwischen dem Medium und der Schicht eine elektromagnetische Oberflächenwelle angeregt wird; und
— Einrichtungen, um den Brechungsindex des Mediums zu ändern.

7. Einrichtung nach Anspruch 6, dadurch gekennzeichnet, daß der Brechungsindex des Mediums mit Hilfe einer elektrochemischen oder einer photochromen Reaktion verändert wird.

**Revendications**

1. Un dispositif d'affichage optique comprenant un film mince à côtés parallèles d'un matériau pouvant présenter une constante diélectrique négative interposée entre, et en contact d'un côté, avec une surface plate d'un prisme optique, et de l'autre côté, avec un milieu pouvant présenter un indice de réfraction variable, des moyens pour faire passer de la lumière polarisée dans un plan monochromatique dans le prisme et sur ladite surface plane du prisme suivant un certain angle pour exciter une onde electromagnétique de surface à l'interface entre ledit milieu et ledit film et des moyens pour faire varier l'indice de réfraction dudit milieu.

2. Un dispositif selon la revendication 1 dans lequel l'onde de surface est une onde de surface du type plasmon ou une onde de surface du type polariton.

3. Un dispositif selon la revendication 1 ou 2 dans lequel le milieu est un electrolyte et les moyens pour faire varier l'indice de réfraction comprennent des moyens pour provoquer une réaction électrochimique dans l'électrolyte.

4. Un dispositif selon la revendication 1 ou 2 dans lequel le milieu est un electrolyte et les moyens pour faire varier l'indice de réfraction comprennent des moyens pour provoquer une réaction photochromique ou electrochromique dans l'électrolyte.

5. Un dispositif selon la revendication 1 ou 2 dans lequel le milieu est un électrolyte et les moyens pour faire varier l'indice de réfraction comprennent des moyens pour provoquer une réaction électrophorétique dans l'électrolyte ou une réorientation moléculaire de ce dernier.

6. Un dispositif d'affichage par projection comprenant un prisme ayant une base, un film mince de matériau à constante diélectrique négative et présentant un côté en contact optique avec la base dudit prisme, et un deuxième côté, un milieu à indice de réfraction variable en contact avec ledit deuxième côté dudit film, des moyens pour faire passer un faisceau de lumière polarisée dans le plan d'incidence, sur la base dudit prisme suivant un certain angle pour exciter une onde électromagnétique de surface à l'interface entre ledit milieu et ledit film, et des moyens pour faire varier l'indice de réfraction dudit milieu.

7. Un dispositif selon la revendication 6 dans lequel l'indice de réfraction du milieu est modifié au moyen d'une réaction électrochimique ou d'une réaction photochromique.

FIG. 1

PRISM

LIGHT BEAM

FILM

VARIABLE INDEX MEDIUM

θ

FIG. 2

PRISM

LIGHT BEAM

θ

θ

SAPPHIRE PLATE

Ag FILM

ELECTROLYTE

POTENTIOSTAT & DRIVING ELECTRONICS

REFERENCE ELECTRODE (OPTIONAL)

COUNTER ELECTRODE